(19) Europäisches Patentamt
European Patent Office
Office européen des brevets

(11) Numéro de publication : **0 506 583 A1**

(12) # DEMANDE DE BREVET EUROPEEN

(21) Numéro de dépôt : **92420072.8**

(22) Date de dépôt : **12.03.92**

(51) Int. Cl.⁵ : **H05B 6/06,** H02M 7/523, H02M 7/5387

(30) Priorité : **18.03.91 FR 9103921**

(43) Date de publication de la demande :
**30.09.92 Bulletin 92/40**

(84) Etats contractants désignés :
**AT BE CH DE DK ES GB GR IT LI LU MC NL PT SE**

(71) Demandeur : **ETS MORICE ET CIE TRAITOGAZ**
**300 Route de Strasbourg, Les Echets**
**F-01700 Miribel (FR)**

(72) Inventeur : **Aldeguer, René**
**57 rue de Créqui**
**F-69006 Lyon (FR)**
Inventeur : **Ferrieux, Jean-Paul**
**11 avenue du Vercors**
**F-38240 Meylan (FR)**
Inventeur : **Barbaroux, Jean**
**1 Le Routoir**
**F-38240 Meylan (FR)**

(74) Mandataire : **Bratel, Gérard et al**
**Cabinet GERMAIN & MAUREAU B.P. 3011**
**F-69392 Lyon Cédex 03 (FR)**

(54) **Générateur pour l'alimentation d'un appareil de chauffage par induction.**

(57)     Ce générateur électrique est destiné, plus particulièrement, à l'alimentation d'un appareil de cuisson par induction.

    Des moyens redresseurs (5), associés à des moyens de filtrage (10) et de lissage (9), alimentent un onduleur de tension avec pont en "H" (1), formé par quatre interrupteurs commandés (11,12,13,14) montés chacun en parallèle avec une diode inverse (15,16,17,18). Le pont (1) alimente un circuit oscillant "série" (20) constitué par un condensateur (23) relié en série à une inductance de chauffage (24). Selon l'invention, les quatre interrupteurs (11,12,13,14) sont constitués par des transistors bipolaires à grille isolée, reliés à des circuits de commande (19) appropriés, et fonctionnant en mode "thyristor".

FIG.1

La présente invention concerne un générateur électrique pour l'alimentation d'un appareil de chauffage par induction, plus particulièrement pour l'alimentation d'un appareil de cuisson par induction, pouvant se présenter comme une plaque ou un foyer à induction prévu pour recevoir un ou plusieurs récipients en métal ferromagnétique, principalement à usage domestique ou professionnel ou pour les cuisines de collectivités.

Encore plus particulièrement, cette invention se rapporte à un générateur électrique pour l'alimentation d'un appareil de chauffage par induction, réalisé sous la forme d'un onduleur de tension avec pont en "H", alimenté depuis un réseau alternatif par des moyens redresseurs associés à des moyens de filtrage et/ou de lissage, le pont en "H" étant formé par quatre interrupteurs commandés reliés à des circuits de commande, et montés chacun en parallèle avec une diode inverse, qui alimentent un circuit oscillant "série" constitué par un condensateur relié en série avec une inductance de chauffage, le circuit oscillant étant connecté entre les points intermédiaires des deux branches du pont en "H". L'inductance, placée au voisinage du corps à chauffer tel que récipient métallique, engendre par induction dans ce corps des courants de Foucault qui le chauffent.

De nombreux documents, plus ou moins anciens, décrivent déjà des générateurs de ce genre pour l'alimentation d'appareils de chauffage par induction, ou des onduleurs d'application non précisée mais présentant des caractéristiques analogues. Pour s'en tenir strictement aux générateurs appliqués à des appareils de cuisson par induction, on peut citer entre autres le certificat d'utilité français N° 2 373 939, ainsi que le brevet français N° 2 539 265 dans lequel, cependant, le circuit oscillant est du type "parallèle" et non "série".

D'une manière générale, ces générateurs connus de même que les onduleurs relevant de techniques analogues utilisent, en tant qu'interrupteurs commandés montés dans les branches du pont en "H", des thyristors dont les gâchettes sont reliées à des circuits électroniques de commande, cette solution classique étant décrite dans les deux documents précités.

Les réalisations actuellement connues, à thyristors, nécessitent des circuits d'aide à la commutation, associés aux thyristors, qui compliquent et renchérissent ces réalisations, et qui sont la source de pertes énergétiques en cours de fonctionnement. La commande s'effectue directement en fréquence, ce qui ne garantit pas une commutation correcte car la fréquence de résonance est mal définie, étant dépendante du corps à chauffer.

La présente invention vise à perfectionner les générateurs du genre considéré, et plus spécialement leur partie "onduleur", pour satisfaire des objectifs de simplification et d'économie de construction, d'amélioration des conditions de fonctionnement avec réduction des pertes énergétiques en cours d'utilisation, et de sécurité de fonctionnement.

A cet effet, l'invention a pour objet un générateur pour l'alimentation d'un appareil de chauffage par induction, du genre précisé en introduction, dans lequel les quatre interrupteurs commandés du pont en "H" de l'onduleur de tension sont constitués par des transistors du type "transistor bipolaire à grille isolée", fonctionnant en mode "thyristor".

Ainsi, l'invention repose essentiellement sur le choix de composants appropriés, réalisant la fonction des interrupteurs de l'onduleur avec pont en "H". Il s'agit de transistors également connus sous la dénomination "IGBT" (Insulated Gate Bipolar Transistor), qui dans le cadre de la présente invention sont exclusivement utilisés en mode thyristor. Autrement dit, dans le fonctionnement de chacun de ces composants, utilisés avec des diodes inverses, une commutation spontanée intervient à l'annulation du courant au sein du composant, en association avec une commutation commandée à l'amorçage du composant, ce qui correspond à un déphasage avant du courant principal (courant traversant le circuit oscillant comportant l'inductance de chauffage) par rapport à la tension alternative fournie par l'onduleur.

Les circuits de commande sont réalisés de manière adaptée au type particulier d'interrupteurs commandés préconisé par l'invention.

De préférence, ces circuits de commande comprennent, en combinaison, des moyens de détection de l'amplitude du courant traversant le circuit oscillant, un circuit d'asservissement de ce courant à une valeur de consigne réglable représentative de la puissance de chauffage désirée, des moyens de détection de la phase du courant traversant le circuit oscillant, un circuit d'asservissement de la phase de ce courant à une valeur de consigne représentative d'une phase minimum imposée audit courant, et des moyens de prise en compte des sorties des deux circuits d'asservissement pour la commande de commutation des quatre transistors constituant les interrupteurs commandés de l'onduleur. Ces derniers moyens comprennent avantageusement un oscillateur contrôlé en tension, dont l'entrée est alimentée par l'un ou l'autre des deux circuits d'asservissement et dont la sortie est reliée à un circuit d'adaptation des signaux de commande, cette sortie étant en phase avec la tension issue de l'onduleur.

Ainsi, les circuits de commande permettent, par l'intermédiaire de l'oscillateur contrôlé en tension, le réglage de la puissance de sortie du générateur, par action sur la fréquence des commandes de commutation des transistors, et en outre ces circuits, en limitant la phase du courant à une valeur minimale, imposent l'annulation du courant avant la commande au blocage des transistors, garantissant ainsi une commutation spontanée à l'ouverture donc un fonctionnement certain en mode "thyristor".

Selon un mode de réalisation, le circuit d'asservissement de la phase comprend, associée à un filtre, une porte logique "OU exclusif" dont une entrée reçoit un signal issu d'un détecteur de passage à zéro du courant traversant le circuit oscillant, et dont l'autre entrée reçoit un signal logique fonction de la sortie de l'oscillateur contrôlé en tension, la sortie du filtre étant reliée à des moyens de comparaison avec la valeur de consigne représentative de la phase minimum imposée.

Selon une caractéristique-complémentaire, la sortie de l'oscillateur contrôlé en tension est reliée au circuit d'adaptation des signaux de commande par l'intermédiaire d'une porte logique "ET", recevant aussi un signal issu d'un circuit de test de présence de charge. Ce dernier circuit peut comprendre des moyens de détection de la puissance active absorbée sur le réseau alternatif, des moyens de comparaison de cette puissance avec une valeur de puissance minimum, et une porte logique "OU" dont les deux entrées reçoivent respectivement le signal de sortie desdits moyens de comparaison et un signal périodique, et dont la sortie est reliée à la deuxième entrée de la porte "ET" précitée.

Dans l'ensemble, le générateur objet de l'invention comporte les avantages suivants :

– Les composants "transistors bipolaires à grille isolée" possèdent une bonne adéquation au mode de fonctionnement choisi, avec pour conséquence de faibles pertes dans les circuits en cours de fonctionnement.

– Le fonctionnement de ces transistors en mode "thyristor" est garanti, quel que soit le type de charge utilisé.

– La sécurité de l'utilisateur est assurée, grâce au circuit de test de présence de charge et aux composants logiques qui inhibent la commande desdits transistors en l'absence de charge.

De toute façon, l'invention sera mieux comprise à l'aide de la description qui suit, en référence au dessin schématique annexé représentant, à titre d'exemple non limitatif, une forme d'exécution de ce générateur pour l'alimentation d'un appareil de chauffage par induction :

Figure 1 est un schéma électrique général d'un générateur conforme à la présente invention ;

Figure 2 représente plus particulièrement, sous forme de schéma synoptique les circuits de commande de l'onduleur ;

Figure 3 est un diagramme illustrant le fonctionnement de cet onduleur et de ses circuits de commande.

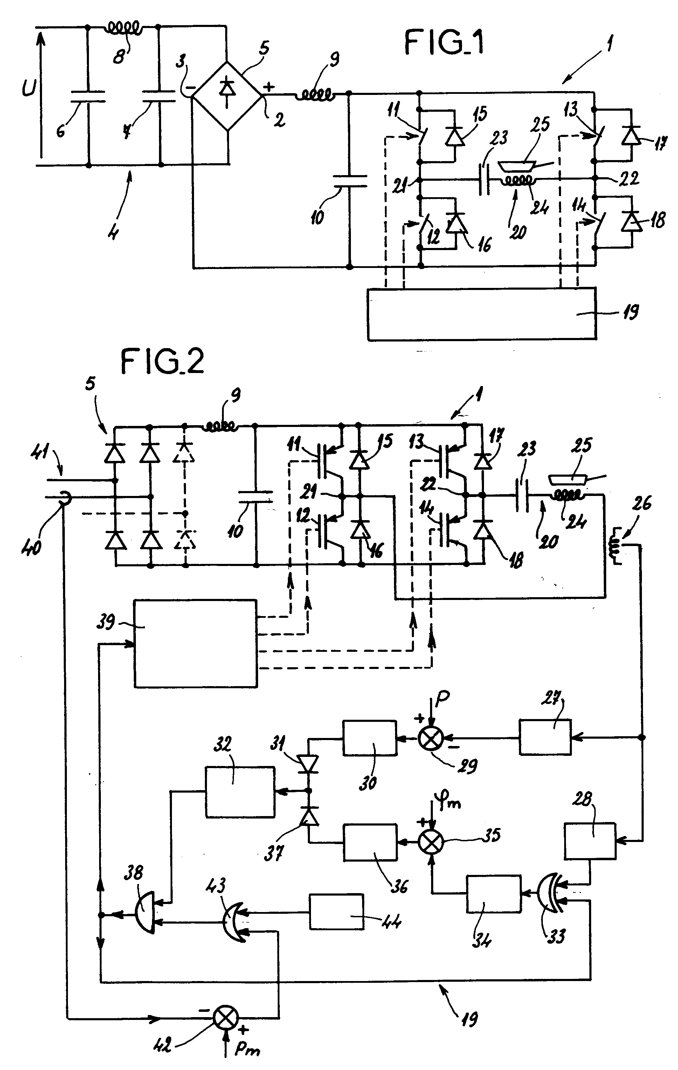

La figure 1 illustre la structure générale d'un générateur conforme à la présente invention, dans une exécution monophasée.

Ce générateur est réalisé sous la forme d'un onduleur de tension, avec un pont en "H" désigné dans son ensemble par le repère 1. Le pont en "H" 1 possède deux branches, montées en parallèle entre les bornes de sorties "plus" 2 et "moins" 3 d'une source de courant redressé désignée globalement par 4, alimentée elle-même à partir d'un réseau alternatif par exemple monophasé.

Dans l'exemple considéré, et d'une manière généralement connue, la source de courant redressé 4 comprend un pont redresseur 5, à quatre diodes montées dans les quatre branches de ce pont. La diagonale d'entrée du pont redresseur 5 est alimentée à partir du réseau alternatif sous une certaine tension U, avec interposition d'un filtre en "π" composé de deux condensateurs 6 et 7 et d'une inductance 8. La diagonale de sortie du pont redresseur 5 alimente le pont en "H" 1 par l'intermédiaire d'une inductance de lissage 9 et d'un condensateur de filtrage 10.

Dans le pont en "H" 1, la première branche comporte deux interrupteurs commandés 11 et 12, montés en série, et la seconde branche comporte elle aussi deux interrupteurs commandés 13 et 14, montés en série. Chaque interrupteur commandé 11, 12, 13, 14 est lui-même monté en parallèle avec une diode inverse, respectivement 15,16,17,18. Des circuits électroniques de commande, désignés globalement par 19, sont reliés aux quatre interrupteurs 11,12,13 et 14.

Un circuit oscillant "série" 20 relie le point intermédiaire 21, situé entre les deux interrupteurs 11 et 12 de la première branche du pont en "H" 1, au point intermédiaire 22 situé entre les deux interrupteurs 13 et 14 de la seconde branche du pont en "H" 1. Le circuit oscillant 20 est constitué par un condensateur 23 monté en série avec une inductance 24, qui est ici une inductance de chauffage placée au voisinage d'un corps à chauffer 25, tel qu'un récipient.

Selon l'invention, chaque interrupteur commandé 11,12,13,14 est constitué par un transistor bipolaire à grille isolée, fonctionnant en mode "thyristor".

En se référant à la figure 2, on décrira maintenant les circuits de commande 19 de l'onduleur, adaptés au type particulier de composants constituant les interrupteurs commandés 11,12,13,14.

Un transformateur d'intensité 26, tel qu'un tore de mesure, assure la détection du courant principal i, parcourant le circuit oscillant 20. Le transformateur d'intensité 26 alimente, d'une part, un détecteur 27 d'amplitude du courant i, réalisable sous la forme d'un détecteur de crête ou d'un détecteur de valeur moyenne, et d'autre part, un détecteur 28 de passage à zéro de ce courant i.

La sortie du détecteur d'amplitude 27 est reliée à une entrée d'un soustracteur 29, dont l'autre entrée reçoit une valeur de consigne P, réglable extérieurement par l'utilisateur et représentative de la puissance désirée. La sortie du soustracteur 29 est reliée, par l'intermédiaire d'un correcteur 30 de type proportionnel-intégral et d'une diode 31, à un oscillateur contrôlé en tension 32.

En parallèle avec la branche de circuits qui vient d'être décrite, le détecteur de passage à zéro 28 est relié à l'oscillateur en tension 32 par l'intermédiaire d'une porte "OU exclusif" 33, d'un filtre 34, d'un soustracteur 35, d'un correcteur 36 de type proportionnel-intégral et d'une diode 37.

La porte "OU exclusif" 33 reçoit à une entrée le signal de sortie du détecteur 28 indiquant le signe du courant i et elle reçoit à son autre entrée un signal logique fonction de la sortie de l'oscillateur 32, signal qui est en phase avec la tension Vo issue de l'onduleur. Cette porte 33 forme avec le filtre 34 un comparateur de phase, dont la sortie délivre un signal continu proportionnel à la phase $\varphi$ du courant i, signal qui est amené à une entrée du soustracteur 35. L'autre entrée du soustracteur 35 reçoit une valeur de consigne $\phi$m ajustable par un réglage interne et représentative de la phase minimum imposée au courant i. Les deux diodes 31 et 37 formend ensemble une porte logique "OU" permettant d'alimenter l'oscillateur 32 soit par le correcteur 30, soit par le correcteur 36.

La sortie de l'oscillateur 32 donne les ordres de cadencement aux interrupteurs 11,12,13 et 14 par l'intermédiaire d'une porte logique "ET" 38 et d'un circuit d'adaptation 39 des signaux de commande. Le circuit d'adaptation 39 met en forme les signaux de commande, en émettant vers les interrupteurs 11 et 14 du pont 1 un signal de commande en phase avec la sortie de l'oscillateur 32, et vers les interrupteurs 12 et 13 du pont 1 un signal de commande en opposition avec la sortie de l'oscillateur 32. De plus, ce circuit d'adaptation 39 impose un temps mort tm dans les commandes, entre les signaux dirigés vers les transistors 11 et 14 du pont en "H" 1, d'une part, et ceux dirigés vers les transistors 12 et 13 du pont en "H" 1, d'autre part, afin d'éviter la conduction simultanée de tous ces transistors.

En fonctionnement normal, seul intervient l'asservissement de l'amplitude du courant i, assurée par les composants 27,29 et 30. Lorsque la phase $\varphi$ devient faible, elle est asservie à sa valeur minimum $\varphi$m par les composants 28 et 33 à 36, l'asservissement de phase devenant alors prioritaire et limitant ainsi la puissance de sortie. En outre, la limitation de la phase à la valeur minimum $\varphi$m garantit le fonctionnement en mode "thyristor", pour les quatre interrupteurs commandés 11,12,13,14 constitués par des transistors bipolaires à grille isolée.

En complément, un transformateur de mesure 40 capte l'intensité sur le réseau alternatif d'alimentation 41 et détecte ainsi la puissance active absorbée sur ce réseau alternatif. Le transformateur de mesure 40 est relié à un soustracteur 42, qui reçoit aussi une référence interne Pm représentant une valeur de puissance minimum. La sortie du soustracteur 42 est reliée à une entrée d'une porte "OU" 43, dont l'autre entrée reçoit le signal périodique fourni par un oscillateur 44. La sortie de la porte "OU" 43 est reliée à la deuxième entrée de la porte "ET" 38. Grâce à ce circuit auxiliaire, lorsque la puissance est nulle ou très faible, par exemple inférieure à 5 % de la puissance nominale, les ordres de commande normalement dirigés vers les interrupteurs 11,12,13,14 sont inhibés ; le fonctionnement de l'onduleur est ainsi interdit en l'absence de charge, et le circuit oscillant 20 n'est plus alimenté. Il est à noter que l'oscillateur 44 teste ainsi la présence de charge de façon périodique, par exemple toutes les dix secondes, en forçant l'alimentation du circuit oscillant 20 pendant un bref instant, cette alimentation ne se maintenant qu'en cas de puissance suffisamment élevée. La sécurité de l'utilisateur est ainsi garantie en l'absence de corps à chauffer 25.

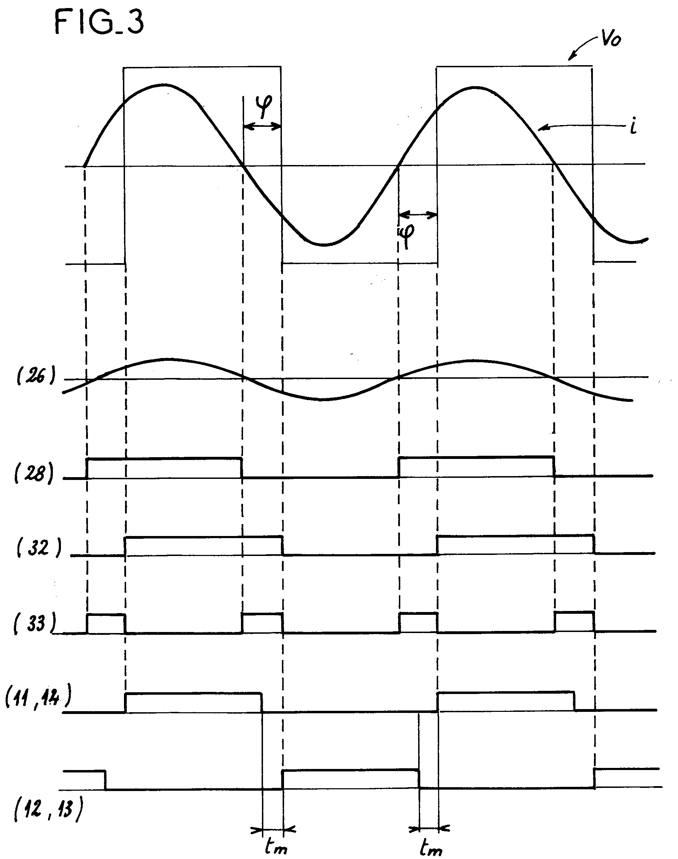

Pour illustrer le fonctionnement des circuits de commande 19, le diagramme de la figure 3 indique sur ses lignes successives et de haut en bas, à la manière d'un oscillogramme :

– le courant principal i parcourant le circuit oscillant 20 incluant l'inductance de chauffage 24, ainsi que la tension Vo issue de l'onduleur, avec indication de la phase $\varphi$ du courant i ;

– l'image du courant i donnée par le transformateur d'intensité 26 ;

– le signal indiquant le signe du courant i, tel que fourni par le détecteur 28 de passage à zéro de ce courant ;

– le signal indiquant le signe de la tension Vo issue de l'onduleur, et correspondant à la sortie de l'oscillateur contrôlé en tension 32 ;

– le signal de sortie de la porte "OU exclusif" 33, qui correspond à la phase $\varphi$ (il est à noter que ce signal est moyenné par le filtre 34 qui fournit ainsi un signal continu proportionnel à la phase $\varphi$) ;

– les commandes effectives réalisées sur les transistors 11 et 14 d'une part, et sur les transistors 12 et 13 d'autre part, avec indication du temps mort tm entre ces commandes.

Comme il va de soi, l'invention ne se limite pas à la seule forme d'exécution de ce générateur pour l'alimentation d'un appareil de chauffage par induction, qui a été décrite ci-dessus, à titre d'exemple ; elle en embrasse, au contraire, toutes les variantes de réalisation et d'application respectant le même principe. C'est ainsi, notamment, que l'on ne s'éloignerait pas du cadre de l'invention :

– par le recours à tous moyens équivalents de ceux décrits, notamment dans le détail de la constitution des circuits de commande 19, par exemple en réalisant les mêmes fonctions logiques avec des dispositions différentes ;

– par une alimentation depuis un réseau alternatif triphasé et non pas monophasé, comme suggéré en traits pointillés sur la figure 2, notamment pour de fortes puissances nominales ;

– par des utilisations particulières, dans le domaine de la cuisson ou autres, avec intégration de l'inductance de chauffage 24 dans le corps à chauffer 25, par exemple pour la constitution d'une friteuse.

## Revendications

1. Générateur électrique pour l'alimentation d'un appareil de chauffage par induction, plus particulièrement pour l'alimentation d'un appareil de cuisson par induction, réalisé sous la forme d'un onduleur de tension avec pont en "H" (1), alimenté depuis un réseau alternatif (41) par des moyens redresseurs (5) associés à des moyens de filtrage (10) et/ou de lissage (9), le pont en "H" (1) étant formé par quatre interrupteurs commandés (11,12,13,14) reliés à des circuits de commande ( 19), et montés chacun en parallèle avec une diode inverse (15,16,17,18), qui alimentent un circuit oscillant "série" (20) constitué par un condensateur (23) relié en série avec une inductance de chauffage (24), le circuit oscillant (20) étant connecté entre les points intermédiaires (21,22) des deux branches du pont en "H" (1), caractérisé en ce que les quatre interrupteurs commandés du pont en "H" (1) de l'onduleur sont constitués par des transistors du type "transistor bipolaire à grille isolée" (11,12,13,14) fonctionnant en mode "thyristor".

2. Générateur électrique pour l'alimentation d'un appareil de chauffage par induction selon la revendication 1, caractérisé en ce que les circuits de commande (19), pour les quatre interrupteurs constitués par des transistors bipolaires à grille isolée (11,12,13,14), comprennent en combinaison des moyens de détection (26,27) de l'amplitude du courant (i) traversant le circuit oscillant (20), un circuit d'asservissement (29,30) de ce courant (i) à une valeur de consigne réglable (P) représentative de la puissance de chauffage désirée, des moyens de détection (26,28) de la phase ($\varphi$) du courant (i) traversant le circuit oscillant (20), un circuit d'asservissement (33,34,35,36) de la phase ($\varphi$) de ce courant (i) à une valeur de consigne représentative d'une phase minimum ($\varphi$m) imposée au courant (i), et des moyens de prise en compte (31,32,37,39) des sorties des deux circuits d'asservissement pour la commande de commutation des quatre transistors (11,12,13,14) constituant les interrupteurs commandés de l'onduleur.

3. Générateur électrique pour l'alimentation d'un appareil de chauffage par induction selon la revendication 2, caractérisé en ce que les moyens de prise en compte des sorties des circuits d'asservissement du courant (i) et de la phase ($\varphi$) comprennent un oscillateur contrôlé en tension (32), dont l'entrée est alimentée par l'un ou l'autre des deux circuits d'asservissement et dont la sortie est reliée à un circuit d'adaptation (39) des signaux de commande, cette sortie étant en phase avec la tension (Vo) issue de l'onduleur.

4. Générateur électrique pour l'alimentation d'un appareil de chauffage par induction selon la revendication 3, caractérisé en ce que le circuit d'asservissement de la phase ($\varphi$) comprend, associée à un filtre (34), une porte logique "OU exclusif" (33) dont une entrée reçoit un signal issu d'un détecteur de passage à zéro (28) du courant (i) traversant le circuit oscillant (20), et dont l'autre entrée reçoit un signal logique fonction de la sortie de l'oscillateur contrôlé en tension (32), la sortie du filtre (34) étant reliée à des moyens de comparaison (35) avec la valeur de consigne représentative de la phase mimimum ($\varphi$m) imposée.

5. Générateur électrique pour l'alimentation d'un appareil de chauffage par induction selon la revendication 3 ou 4, caractérisé en ce que la sortie de l'oscillateur contrôlé en tension (32) est reliée au circuit d'adaptation (39) des signaux de commande par l'intermédiaire d'une porte logique "ET" (38), recevant aussi un signal issu d'un circuit de test de présence de charge (40,42, 43,44).

6. Générateur électrique pour l'alimentation d'un appareil de chauffage par induction selon la revendication 5, caractérisé en ce que le circuit de test de présence de charge comprend des moyens de détection (40) de la puissance active absorbée sur le réseau alternatif (41), des moyens de comparaison (42) de cette puissance avec une valeur de puissance minimum (Pm), et une porte logique "OU" (43) dont les deux entrées reçoivent respectivement le signal de sortie desdits moyens de comparaison (42) et un signal périodique (de 44), et dont la sortie est reliée à la deuxième entrée de la porte "ET" (38).

7. Générateur électrique pour l'alimentation d'un appareil de chauffage par induction selon l'une quelconque des revendications 3 à 6, caractérisé en ce que le circuit d'adaptation (39) est conçu pour imposer un temps mort (tm) entre les commandes des transistors (11,12 ; 13,14) d'une même branche du pont en "H" (1).

FIG.1

FIG.2

# FIG.3

Office européen
des brevets

**RAPPORT DE RECHERCHE EUROPEENNE**

Numero de la demande

EP 92 42 0072

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 853 832 (T.A. STUART)<br>* Colonne 2, ligne 42 - colonne 3, ligne 6; figures 1,2 *<br>--- | 1,2,7 | H 05 B 6/06<br>H 02 M 7/523<br>H 02 M 7/5387 |
| D,A | FR-A-2 373 939 (OREGA ELECTRONIQUE ET MECANIQUE)<br>* Page 4, ligne 26 - page 5, ligne 34; page 9, ligne 16 - page 10, ligne 32; figures 1,2 *<br>--- | 1,2 | |
| A | 18TH ANNUAL IEEE POWER ELECTRONICS SPECIALISTS CONFERENCE, Blacksburg, Virginia, décembre 1987, pages 674-681; M. NAKOAKA et al.: "A phase-difference angle control-mode PWM high-frequency resonant inverters using static induction-transistors and thyristors"<br>* Page 674, colonne de droite, ligne 37 - page 675, colonne de gauche, ligne 30; page 678, colonne de gauche, lignes 3-22; figures 1,2,8,9 *<br>--- | 3,4 | |
| | | | **DOMAINES TECHNIQUES RECHERCHES (Int. Cl.5)** |
| A | GB-A-2 207 305 (K.K. TOSHIBA)<br>* Page 13, ligne 8 - page 16, ligne 7; figures 2-4 *<br>--- | 5,6 | H 05 B<br>H 02 M |
| A | DE-A-2 836 610 (LICENTIA PATENT-VERWALTUNGS-GmbH)<br>--- | | |
| A | US-A-4 777 578 (T.M. JAHNS)<br>---       -/- | | |

Le présent rapport a été établi pour toutes les revendications

| Lieu de la recherche | Date d'achèvement de la recherche | Examinateur |
|---|---|---|
| LA HAYE | 24-06-1992 | ALBERTSSON E.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P0402)

Office européen
des brevets

RAPPORT DE RECHERCHE EUROPEENNE

Numero de la demande

EP   92 42 0072

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | 3RD EUROPEAN CONFERENCE ON POWER ELECTRONICS AND APPLICATIONS, Aachen, 9-12 octobre 1989, vol. 3, pages 1103-1108, Düsseldorf, DE; D. FERRER et al.: "Contribution of blockable power elements (GTOS) to resonant converters for induction heating" ----- | | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 24-06-1992 | ALBERTSSON E.G. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.........................................................................
& : membre de la même famille, document correspondant

EPO FORM 1503 03.82 (P0402)